# EUROPÄISCHE PATENTSCHRIFT

(11) **EP 0 790 106 B1**
(45) Veröffentlichungstag und Bekanntmachung des Hinweises auf die Patenterteilung: **14.04.1999**
(21) Anmeldenummer: 97100834.7
(22) Anmeldetag: 21.01.1997
(51) Int. Cl.: B25J 15/02

(54) **Greifvorrichtung bzw. Spannvorrichtung**
Gripping or clamping device
Dispositif de préhension ou de serrage

(30) Priorität: 09.02.1996 DE 19604649
(43) Veröffentlichungstag der Anmeldung: 20.08.1997
(73) Patentinhaber: Fritz Schunk GmbH & Co KG Fabrik für Spann- und Greifwerkzeuge, 74348 Lauffen (DE)
(72) Erfinder: Reichert, Andreas, 71720 Oberstenfeld (DE); Grunwald, Harry, 74336 Meimsheim (DE); Arnold, Ulrich, 74357 Bönnigheim (DE)
(74) Vertreter: Dreiss, Fuhlendorf, Steimle & Becker, Patentanwälte

(56) Entgegenhaltungen:
- EP-A- 0 503 191
- DE-A- 3 306 526
- DE-A- 3 513 648
- DE-A- 4 320 071
- DE-U- 8 713 238
- US-A- 5 125 708

## Beschreibung

Die Erfindung betrifft eine Greifvorrichtung bzw. Spannvorrichtung für manuell zu bedienende oder automatische Handhabungsgeräte mit einem Greifergehäuse, wenigstens einer im Greifergehäuse verschieblich gelagerten Grundbacke und einem Antrieb für die Grundbacke, wobei der Antrieb von einem hydraulisch oder pneumatisch beaufschlagbaren, in einem Zylinder verschieblich gelagerten Kolben und einem Keilhakengetriebe gebildet wird, gemäß Oberbegriff des Anspruchs 1.

Eine derartige Greifvorrichtung ist z.B. aus der DE 89 02 325 U1 bekannt. Um mit einem Handhabungsgerät oder mit einem Roboterarm Werkstücke einfach und dennoch präzise greifen zu können, werden in der Regel Parallelgreifer eingesetzt, die pneumatisch oder hydraulisch betätigt werden. Dabei wird von einem Druckmedium ein Kolben beaufschlagt, der in einem im Greifergehäuse eingearbeiteten Zylinder verschieblich gelagert ist. Durch die Verschiebung des Kolbens wird ein Keilhakengetriebe betätigt, so daß die Grundbacken aus dem Greifergehäuse ausgeschoben oder in das Greifergehäuse eingezogen werden. Die Grundbacken weisen einen T-förmigen Querschnitt auf und sind in entsprechenden Führungen gelagert. Der wesentliche Vorteil dieser Grundbacken ist neben der relativ hohen Greifkraft die hohe Seitenstabilität und eine geringe Kippneigung. Es hat sich jedoch gezeigt, daß die Grundbacken, insbesondere deren Lauffläche, einem hohen Verschleiß unterliegen, da aufgrund der offenen Führung die im Arbeitsbereich mitunter verwendete Spülflüssigkeit die Schmierstoffe von den Führungsflächen abspült und außerdem Schmutzpartikel zwischen das Gehäuse und die Grundbacken eindringen. Insbesondere die Schmutzpartikel bewirken einen hohen Abrieb an den Gleitflächen, so daß bereits nach kurzer Zeit die exakte Führungsgenauigkeit und Spielfreiheit verloren geht.

Aus der DE 33 06 526 A1 ist eine Greifvorrichtung bekannt, bei der die Grundbacken im wesentlichen zylinderförmig ausgebildet und mittels Dichtungen druckmitteldicht im Gehäuse gelagert sind. Eine Verdrehsicherung der Grundbacken erfolgt über zapfen, die über das Gehäuse vorstehen und in löcher eingreifen, die in den Greiferfinger vorgesehen sind.

Der Erfindung liegt daher die Aufgabe zugrunde, eine Greifvorrichtung der eingangs genannten Art derart weiterzubilden, daß selbst bei der Verwendung in stark verschmutzten Räumen und auch bei Kontamination mit Spülflüssigkeiten und ähnlichen Fluiden der Veschleiß reduziert wird und die greifvorrichtung auch nach langerem Gebrauch noch leichtgängig ist.

Diese Aufgabe wird erfindungsgemäß durch die Merkmale des Anspruchs 1 gelöst.

Die kreisförmig ausgebildeten Grundbacken können wesentlich dichter im Gehäuse geführt werden, da die Durchtrittsöffnung bzw. Aufnahmeöffnungen im Greifergehäuse für die Grundbacken wesentlich präziser gefertigt werden können, als eine T-förmige Öffnung für T-förmige Grundbacken. Aufgrund der präziseren Fertigung dieser Aufnahmeöffnungen können weder Fremdpartikel noch Flüssigkeiten in den Zwischenraum zwischen Gehäuse und Grundbacken eindringen. Die Lebensdauer einer derartigen Greifvorrichtung ist daher wesentlich erhöht.

Dabei ist das Gehäuse mit den kreisförmigen Abschnitt der Grundbacken umgreifenden Dichtelementen versehen. Diese Dichtelemente haben die Aufgabe, die Grundbacken dicht zu umschließen und dadurch ein eventuelles Eindringen von Festkörpern oder Flüssigkeiten oder sogar von Gasen weiter zu verhindern.

Um die Dichtungen der Dichtelemente zu schonen, können diese mit Abstreifern versehen sein, wodurch an den Grundbacken anhaftender Schmutz und Flüssigkeit abgestreift wird. Vorteilhaft sind dabei die Dichtungen und Abstreifer in einem einzigen Dichtelement vereint bzw. einteilig ausgebildet. Dieses ist im Bereich der Gehäuseöffnung in das Gehäuse eingesetzt. Der erfindungsgemäße Greifer kann nun auch in stark verschmutzten Räumen, wo z.B. Gußteile geputzt werden oder abrasiver Gußstaub anfällt, problemlos eingesetzt werden.

Bei einer Weiterbildung ist vorgesehen, daß die Verdrehsicherung von einer an der Grundbacke vorgesehenen Nut gebildet wird, in die eine Paßfeder eingreift, die sich am Gehäuse abstützt und innerhalb des Gehäuses liegt. Dabei erstreckt sich die Nut für die Paßfeder parallel zur Längsachse der Grundbacke, wobei die Nut lediglich in dem im Gehäuse verbleibenden Abschnitt der Grundbacke vorgesehen ist. Der aus dem Gehäuse ausfahrende Abschnitt der Grundbacke weist demnach keine Nut auf, so daß die Abdichtung gewährleistet ist.

Um auf einfache, jedoch effektive Weise Toleranzen ausgleichen zu können, ist die Paßfeder schwimmend im Gehäuse gelagert, d.h. die Paßfeder ist an einem Gehäusedeckel befestigt, insbesondere einstückig mit diesem ausgebildet. Der Einsatz der Paßfeder in die Nuten der Grundbacken ist auf diese Weise problemlos möglich, auch wenn die Nuten der Grundbacken nicht zu der die Paßfeder aufnehmenden Gehäuseöffnung exakt fluchtet. Das Gehäuse ist im Bereich der Nut offen, wobei jedoch diese Öffnung sowohl breiter als auch länger als die Paßfeder ist und diese Gehäuseöffnung über einen die Paßfeder aufweisenden Deckel verschließbar ist. Mit dem Aufsetzen des Deckels und Verschließen des Gehäuses wird die Paßfeder in die entsprechenden Nuten der Grundbacken eingesetzt und dadurch die Grundbacken gegen ein Verdrehen gesichert. Es werden somit die gesamten auf die Paßfeder einwirkenden Kräfte über den Deckel am Gehäuse abgestützt. Aufgrund des relativ breiten Deckels können hohe Kräfte übertragen werden.

Bei einem Ausführungsbeispiel ist vorgesehen, daß die Verdrehsicherung für die Grundbacken an der dem Antrieb für die Grundbacken gegenüberliegenden Seiten vorgesehen ist. Auf diese Weise wird sowohl die Montage als auch die Wartung erleichtert. Der die Paßfeder aufweisende Deckel ist vorteilhaft mit dem Gehäuse verschraubt und gegenüber dem Gehäuse abgedichtet. Über die Verschraubung können Toleranzen hinsichtlich der Lage der Nuten in den Grundbacken sowie dem Gehäuse problemlos ausgeglichen werden.

Dadurch, daß erfindungsgemäß der das Keilhakengetriebe aufweisende Raum des Gehäuses mit der vom Keilhakengetriebe abgewandten Seite des Zylinderraumes fluidverbunden ist, entsteht beim Ausfahren der Grundbacken bzw. beim Einziehen der Grundbacken ins Gehäuse kein Unterdruck. Ein Unterdruck hätte den gravierenden Nachteil, daß über die Spalte zwischen den Grundbacken und dem Gehäuse Gase oder Flüssigkeiten, z.B. Spülflüssigkeit in das Gehäuse eingesaugt werden könnten, wodurch der Schmierfilm auf den Grundbacken zerstört werden könnte. Außerdem würde mit diesen Flüssigkeiten Schmutz eingeschleppt werden. Die Verbindung dieses Keilhakengetrieberaumes mit dem beim Ausfahren der Grundbacken unter Druck stehenden Raum hat den wesentlichen Vorteil, daß der Keilhakengetrieberaum stets unter Druck steht und somit kein Medium eindringen kann, allenfalls bei Undichtigkeiten Fluide austreten könnten.

Bevorzugt sind die Grundbacken stirnseitig mit Greiferbacken bestückbar. Diese werden z.B. über eine Verschraubung angeflanscht, wobei sie zusätzlich noch zentriert sein können.

Bevorzugt sind die Grundbacken über ihre gesamte Länge vollständig in das Gehäuse einfahrbar. Dabei werden sie vollständig über ihre gesamte Länge vom Gehäuse umgeben, so daß lediglich ihre Stirnseite, an der die Greiferbacken befestigt sind, zugänglich sind. Dies hat den wesentlichen Vorteil, daß die Grundbacken beim Einfahren in das Gehäuse zum einen gesäubert, zum anderen frisch geschmiert werden.

Bei einem Ausführungsbeispiel weisen die Grundbacken vorteilhaft Aufnahmeöffnungen für Elemente zur Positionsabfrage auf. Über die Positionsabfrageelemente können die Offenstellung und die Schließstellung der Greifervorrichtung ermittelt und entsprechend die Steuerung angesteuert werden.

Die Erfindung ist nicht auf z.B. Zwei-Finger-Parallelgreifer beschränkt, sondern umfaßt auch Greifer mit mehreren Grund- und Greiferbacken, z.B. Drei-Finger-Zentrischgreifer.

Weitere Vorteilhafte, Merkmale ergeben sich aus den Unteransprüchen und aus der nachfolgenden Beschreibung, in der unter Bezugnahme auf die Zeichnung zwei besonders bevorzugte Ausführungsbeispiele im einzelnen beschrieben sind. In der Zeichnung zeigen:
- Figur 1: einen Längsschnitt durch eine erste Ausführungsform der erfindungsgemäßen Greifvorrichtung;
- Figur 2: eine perspektivische Ansicht des Gehäuses der Greifvorrichtung gemäß Figur 1;
- Figur 3: eine perspektivische Ansicht eines Gehäusedeckels in vergrößerter Wiedergabe;
- Figur 4: eine perspektivische Darstellung eines Grundbackens;
- Figur 5: eine perspektivische Darstellung eines Gehäuses einer zweiten Ausführungsform der erfindungsgemäßen Greifvorrichtung für drei Grundbacken; und
- Figur 6: eine perspektivische Darstellung eines Gehäusedeckels für das Gehäuse gemäß Figur 5.

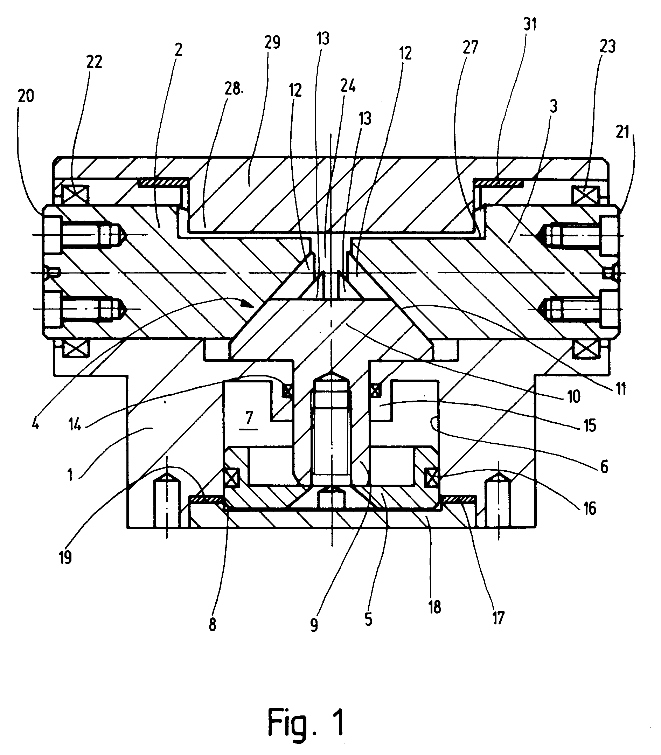

Die in der Figur 1 dargestellte Abbildung zeigt einen Längsschnitt durch einen Zwei-Finger-Parallelgreifer mit einem Gehäuse 1, zwei Grundbacken 2 und 3, einem Antrieb 4 für die Grundbacken 2 und 3, sowie einem Kolben 5, der in einem Zylinder 6 verschieblich gelagert ist. Das Gehäuse 1 weist einen im wesentlichen T-förmigen Querschnitt auf, wobei die beiden Grundbacken 2 und 3 in den einander gegenüberliegenden Schenkeln des Gehäuses 1 verschieblich gelagert sind. Der dazu vertikale Schenkel des Gehäuses 1 weist den Zylinder 6 auf, der vom Kolben 5 in zwei Zylinderräume 7 und 8 unterteilt wird. In der Figur 1 befindet sich der Kolben 5 in seiner einen Endlage, in der die beiden Grundbacken 2 und 3 über den Antrieb 4 in das Gehäuse 1 eingezogen worden sind. In dieser Lage des Kolbens 5 nimmt der Zylinderraum 8 sein minimales und der Zylinderraum 7 sein maximales Volumen ein.

Der Kolben 5 ist mit einer Kolbenstange 9 verschraubt, wobei die Kolbenstange 9 in den Kopf 10 eines den Antrieb 4 bildenden Keilhakengetriebes 11 übergeht. Der Kopf 10 ist über die an sich bekannten Keilflächen mit entsprechenden Keilflächen 12, 13 der Grundbacken 2 und 3 gekoppelt. Eine Bewegung des Kolbens 5 in vertikaler Richtung wird über das Keilhakengetriebe 11 in eine Bewegung der Grundbacken 2 und 3 in horizontaler Richtung, d.h. orthogonal zur Bewegungsrichtung des Kolbens 5, umgelenkt. Dabei werden sowohl Zug- als auch Druckkräfte übertragen.

Zur Abdichtung der Zylinderräume 7 und 8 dienen eine Dichtung 14, die die Kolbenstange 9 umfaßt und in einem die Kolbenstange 9 führenden Gehäuseansatz 15 gelagert ist, eine Dichtung 16, die in die Umfangsfläche des Kolbens 5 eingelassen ist und den Kolben 5 gegenüber der Wand des Zylinders 6 abdichtet, sowie eine Flachdichtung 17, die den Zylinderraum 8 gegenüber der Atmosphäre abdichtet. Die Flachdichtung 17 befindet sich zwischen einem Gehäusedeckel 18 und dem Grund einer Ausnehmung 19 im Gehäuse 1 zur Aufnahme des Gehäusedeckels 18.

Außerdem ist in Figur 1 erkennbar, daß die beiden Grundbacken 2 und 3 im Bereich ihrer freien Stirnflächen 20 und 21 von jeweils einem Dichtelement 22 bzw. 23 umgriffen sind, so daß der die Grundbacken 2 und 3 aufnehmende Innenraum 24 gegenüber der Atmosphäre abgedichtet ist. Die Dichtelemente 22 und 23 bestehen aus einer Dichtung und einem Abstreifer, wobei diese beiden Elemente im Dichtelement 22 bzw. 23 vereint sind. Es wird noch daraufhingewiesen, daß der Innenraum 24 über einen nicht dargestellten Kanal mit dem Zylinderraum direkt oder indirekt verbunden ist. Auf diese Weise wird vermieden, daß beim Ausfahren der Grundbacken 2 und 3 aus dem Gehäuse 1 ein Unterdruck im Innenraum 24 entsteht.

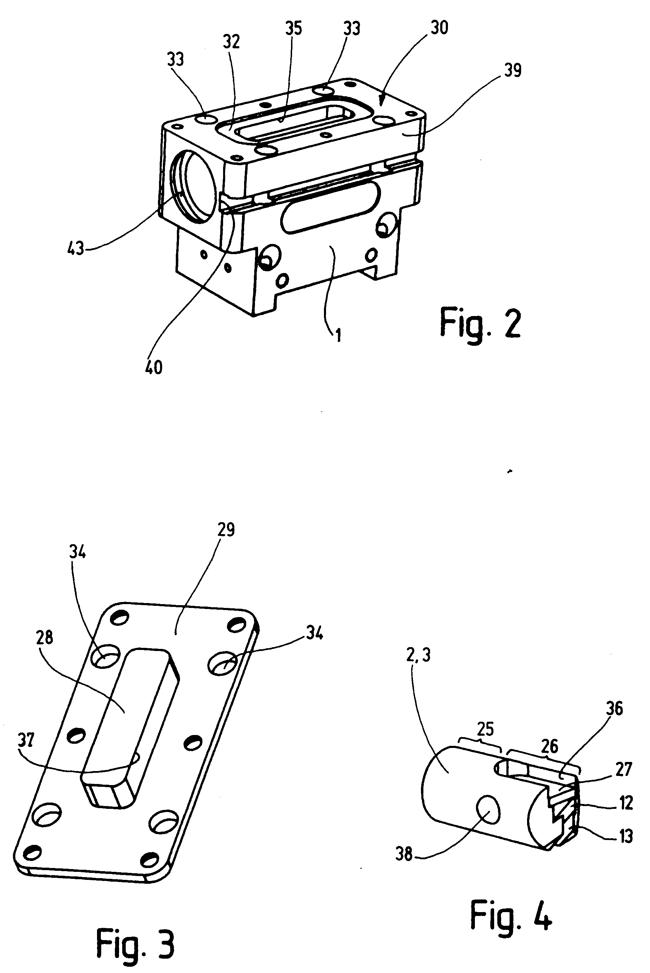

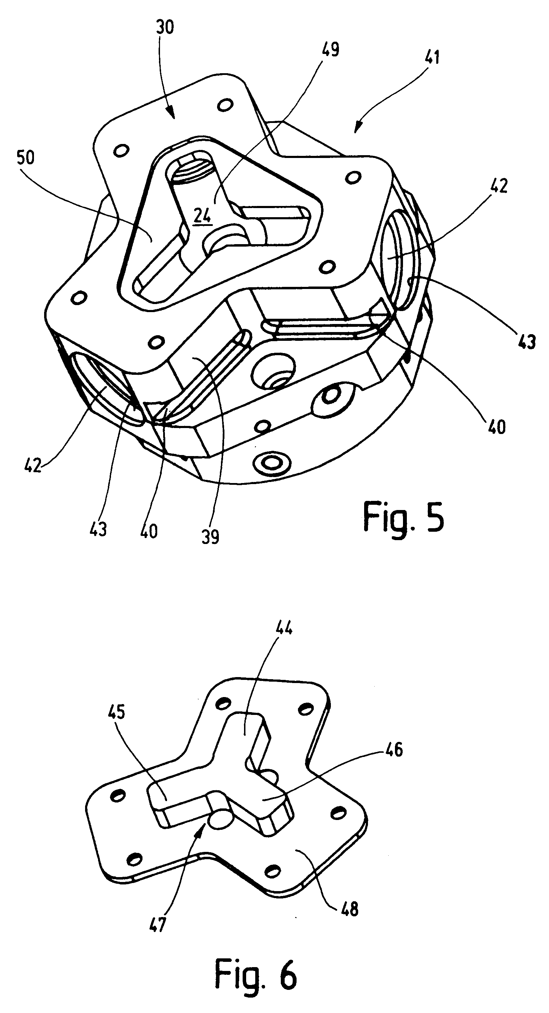

In Figur 4 ist eine Grundbacke 2 bzw. 3 dargestellt, wobei der kreisförmige Querschnitt des aus dem Gehäuse 1 ausfahrenden Abschnitts 25 deutlich erkennbar ist. Der Abschnitt 26 ist mit einer Längsnut 27 versehen, die den Keilflächen 12 und 13 und somit dem Antrieb 4 in Bezug auf die Längsachse gegenüberliegt. Die Längsnut 27 ist nach außen offen und zur Aufnahme einer Paßfeder 28 (Figuren 1 und 3) geeignet. Diese Paßfeder 28 ist einstückig an einem Gehäusedeckel 29 angeformt, wie ebenfalls aus den Figuren 1 und 3 erkennbar ist. Beim Ausfahren der beiden Grundbacken 2 und 3 gleiten die Längsnuten 27 dieser beiden Grundbacken 2 und 3 an der Paßfeder 28 entlang, wobei jedoch die Paßfeder 28 in ständigem Eingriff in der Längsnut 27 bleibt. Über die Nut- und Federverbindung wird eine Verdrehsicherung für die beiden Grundbacken 2 und 3 geschaffen, wodurch nicht nur eine hohe Seitenstabilität gewährleistet wird, sondern auch ein Verkippen der Grundbacken 2 und 3 vermieden wird.

Der Gehäusedeckel 29 wird nach dem Einsetzen der Paßfeder 28 in die entsprechenden Längsnuten 27 der Grundbacken 2 und 3 auf die Oberseite 30 (Figur 2) des Gehäuses 1 aufgeschraubt und dadurch die Verbindung der Paßfeder 28 mit dem Gehäuse 1 hergestellt. Zwischen den Gehäusedeckel 29 und das Gehäuse 1 wird eine Dichtung 31 in eine hierfür vorgesehene Ausnehmung 32 eingelegt. Auf diese Weise wird der Gehäuseinnenraum 24 deckelseitig abgedichtet. Durch geringfügige Toleranzen in den Gewindebohrungen 33 des Gehäuses 1 und den Schraubenlöchern 34 des Gehäusedeckels 29 kann dieser vor dem Festziehen der Schrauben geringfügig auf der Oberseite 30 des Gehäuses 1 schwimmen, was den Vorteil hat, daß Toleranzen bei der Herstellung der Längsnut 27 ausgeglichen werden können. Die Gehäuseöffnung 35 ist entsprechend groß gewählt, so daß die Paßfeder 28 geringfügig in dieser Gehäuseöffnung 35 verschoben werden kann.

Zusammenfassend kann festgestellt werden, daß bei dieser ersten Ausführungsform durch die Kreisform des Abschnitts 25 der Grundbacken 2 und 3 eine optimale Abdichtung des Gehäuseinnenraums 24 gegenüber der Atmosphäre erzielt wird, so daß weder Fluide noch Festpartikel eindringen und die Laufflächen beschädigen können. Eine Verdrehsicherung wird dadurch geschaffen, daß sich die Flanken 36 der Längsnut 27 an den Seitenflächen 37 der Paßfeder 28 abstützen können, wobei die Paßfeder 28 durch Verschraubung des Gehäusedeckels 29 starr mit dem Gehäuse 1 verbunden ist.

In Figur 4 ist außerdem eine seitliche Öffnung 38 in der Grundbacke 2 bzw. 3 erkennbar, in welche ein Element zur Positionsabfrage, z.B. ein Magnet o.dgl., eingesetzt werden kann. Auf der gegenüberliegenden Seite der Grundbacke 2 bzw. 3 (in der Figur 4 vom Betrachter abgewandt) befindet sich ebenfalls eine derartige Öffnung, die jedoch bezüglich der Öffnung 38 versetzt angeordnet ist, d.h. weiter in Richtung der Stirnfläche 20 bzw. 21 oder in Richtung der gegenüberliegenden, die Keilflächen 12 und 13 aufweisenden Seite verschoben ist. Die beiden Grundbacken 2 und 3 sind identisch ausgebildet, so daß mit dem Magnet der einen Öffnung 38 z.B. die ausgefahrene Position und mit dem Magnet in der anderen Öffnung die eingezogene Position der Grundbacken 2 und 3 festgestellt werden kann.

Mit den in den Grundbacken 2 und 3 sich befindenden Elementen wirken Sensoren, z.B. Hall-Sensoren zusammen, die an der Außenseite des Gehäuses 1 befestigt sind. Hierfür weist eine Seitenfläche 39 des Gehäuses 1 eine Längsnut 40 auf, die parallel zur Verschiebeachse der Grundbacken 2 und 3 und auf deren Höhe vorgesehen ist. In diese Längsnut 40 können Sensoren, z.H. Hall-Sensoren, eingeschoben und an beliebiger Stelle fixiert werden.

In den Figuren 5 und 6 wird ein zweites Ausführungsbeispiel der Erfindung dargestellt, wobei diese Greifvorrichtung mit insgesamt drei Grundbacken (Figur 4) bestückbar ist. Hierfür weist das Greifergehäuse 41 drei Aufnahmebohrungen 42 auf, in welche die Grundbacken einsetzbar sind. Auch hier sind in entsprechende Umfangsnuten 43 (entsprechend bei Figur 2) Dichtelemente einsetzbar, die sowohl eine Abdichtung als auch ein Abstreifen von Schmutz von den Oberflächen der Grundbacken bewirken. Die Verdrehsicherung wird bei diesem Ausführungsbeispiel ebenfalls über eine Nut-Feder-Verbindung erzielt, wobei in die Längsnuten 27 der Grundbacken jeweils ein Schenkel 44, 45 oder 46 einer Paßfeder 47 eingreift. Diese Paßfeder 47 ist ebenfalls an einen im wesentlichen sternförmig ausgebildeten Gehäusedeckel 48 angeformt und greift in eine Gehäuseöffnung 49 des Greifergehäuses 1. Die Abdichtung des Gehäusedeckels 48 gegenüber dem Gehäuseinnenraum 24 erfolgt über eine Dichtung, die zwischen dem Gehäusedeckel 48 und eine Ausnehmung 50 eingelegt wird. Der Gehäusedeckel 48 wird nach dem Einsetzen der Paßfeder 47 in die entsprechenden Längsnuten 27 der Grundbacken auf die Oberseite 30 des Greifergehäuses 41 aufgeschraubt. Vor dem Festschrauben ist die Paßfeder 47 schwimmend gelagert, was dem Toleranzausgleich dient.

Auch das Greifergehäuse 41 ist an der Seitenfläche 39 mit Längsnuten 40 versehen, in welche Sensoren eingesetzt und fixiert werden können, mit denen die Position der Greiferbacken abtastbar sind.

## Patentansprüche

1. Greifvorrichtung für manuell zu bedienende oder automatische Handhabungsgeräte,
- mit einem Greifergehäuse (1),
- mit wenigstens einer im Greifergehäuse (1) verschieblich gelagerten Grundbacke (2, 3),
- mit einem Antrieb (4) für die Grundbacke (2, 3), wobei der Antrieb (4) von einem hydraulisch oder pneumatisch beaufschlagbaren, in einem Zylinder (6) verschieblich gelagerten Kolben (5) und einem Keilhakengetriebe (11) gebildet wird, und
- mit einer Verdrehsicherung für die Grundbacke (2, 3),
- wobei die Grundbacke (2, 3) wenigstens an dem beim Öffnen der Greifvorrichtung aus dem Greifergehäuse (1) heraustretenden ersten Abschnitt (25) einen kreisförmigen Querschnitt aufweist und das Gehäuse (1) mit diesen ersten Abschnitt (25) der Grundbacke (2, 3) umgreifenden Dichtelementen (22, 23) versehen ist,
dadurch gekennzeichnet,
daß die Verdrehsicherung sich abstützend am Gehäuse (1) direkt auf einen zweiten Abschnitt (26) der Grundbacke (2, 3) wirkt, der bei ausgefahrener Grundbacke (2, 3) im Gehäuse (1) verbleibt.

2. Greifvorrichtung nach Anspruch 1, dadurch gekennzeichnet, daß die Verdrehsicherung von einer an der Grundbacke (2, 3) vorgesehenen Längsnut (27) gebildet wird, in die eine Paßfeder (28) eingreift, die sich am Gehäuse (1) abstützt und innerhalb des Gehäuses (1) liegt.

3. Greifvorrichtung nach Anspruch 2, dadurch gekennzeichnet, daß die Paßfeder (28) an einem Gehäusedeckel (29) befestigt, insbesondere einstückig mit diesem ausgebildet ist.

4. Greifvorrichtung nach einem der Ansprüche 1 bis 3, dadurch gekennzeichnet, daß die Verdrehsicherung an der dem Antrieb (4) für die Grundbacken (2, 3) gegenüberliegenden Seite vorgesehen ist.

5. Greifvorrichtung nach einem der Ansprüche 2 bis 4, dadurch gekennzeichnet, daß das Gehäuse (1) im Bereich der Längsnut (27) offen ist und über einen eine Paßfeder (28) aufweisenden Gehäusedeckel (29) verschließbar ist.

6. Greifvorrichtung nach einem der Ansprüche 3 bis 5, dadurch gekennzeichnet, daß der Gehäusedeckel (29) mit dem Gehäuse (1) verschraubbar ist.

7. Greifvorrichtung nach einem der Ansprüche 3, 5 oder 6, dadurch gekennzeichnet, daß der Gehäusedeckel (29) gegenüber dem Gehäuse (1) abgedichtet ist.

8. Greifvorrichtung nach einem der vorhergehenden Ansprüche, dadurch gekennzeichnet, daß die Dichtelemente (22, 23) neben den Dichtungen mit Abstreifern für Fremdkörper versehen sind.

9. Greifvorrichtung nach einem der vorhergehenden Ansprüche, dadurch gekennzeichnet, daß der das Keilhakengetriebe (11) aufnehmende Raum (24) des Gehäuses (1) mit der vom Keilhakengetriebe (11) abgewandten Seite des Zylinderraums (8) fluidverbunden ist.

10. Greifvorrichtung nach einem der vorhergehenden Ansprüche, dadurch gekennzeichnet, daß der Gehäuseinnenraum (24) zusammen mit einem Zylinderraum (8) mit Druck beaufschlagbar ist.

11. Greifvorrichtung nach einem der vorhergehenden Ansprüche, dadurch gekennzeichnet, daß die Grundbacken (2, 3) stirnseitig mit Greiferbacken bestückbar sind.

12. Greifvorrichtung nach einem der vorhergehenden Ansprüche, dadurch gekennzeichnet, daß die Grundbacken (2, 3) über ihre gesamte Länge vollständig in das Gehäuse (1) einfahrbar sind.

13. Greifvorrichtung nach einem der vorhergehenden Ansprüche, dadurch gekennzeichnet, daß die Grundbacken (2, 3) Aufnahmeöffnungen (38) für Elemente zur Positionsabfrage aufweisen.

14. Greifvorrichtung nach einem der vorhergehenden Ansprüche, dadurch gekennzeichnet, daß sie zwei oder mehr, insbesondere drei, gleichmäßig über den Umfang verteilt angeordnete Grundbacken (2, 3) aufweist.

## Claims

1. A gripper device for manually operated or automatic handling devices, having:
a gripper housing (1),
at least one base jaw (2, 3) displaceably seated in the gripper housing (1),
a drive (4) for the base jaw (2, 3), wherein the drive (4) is constituted by a hydraulically or pneumatically chargeable piston (5) displaceably seated in a cylinder (6) and a spline hook gear (11), and
a protection against torsion for the base jaw (2, 3),
whereby the base jaw (2, 3) has a circular cross section at least in the first section (25) extending from the gripper housing (1) when the gripper device is opened, and the housing (1) is provided with sealing elements (22, 23) enclosing the first section (25) of the base jaw (2, 3), **characterized in that** the protection against torsion supporting against the housing (1) is directly acting upon the second section (26) of the base jaw (2, 3), which remains in the housing (1) when the base jaw (2, 3) is extended.

2. The gripper device in accordance with claim 1, characterized in that the protection against torsion is constituted by a longitudinal groove (27) provided on the base jaw (2, 3), which is engaged by a feather key (28) supported on the housing (1).

3. The gripper device in accordance with claim 2, characterized in that the feather key (28) is fastened on a housing cover (29), in particular is embodied in one piece with it.

4. The gripper device in accordance with claims 1 to 3, characterized in that the protection against torsion is provided on the side opposite the drive (4) for the base jaws (2, 3).

5. The gripper device in accordance with claims 2 to 4, characterized in that the housing (1) is open in the area of the longitudinal groove (27) and can be closed by means of a cover (29) having a feather key (28).

6. The gripper device in accordance with claims 3 or 5, characterized in that the housing cover (29) can be screwed together with the housing (1).

7. The gripper device in accordance with claim 3, 5 or 6, characterized in that the housing cover (29) is sealed against the housing (1).

8. The gripper device in accordance with anyone of the preceding claims, characterized in that the sealing elements (22, 23) are provided with strippers for foreign bodies besides the seals.

9. The gripper device in accordance with one of a preceding claims, characterized in that the chamber (24) of the housing (1) receiving the spline hook gear (11) is in fluidic connection with the side of the cylinder chamber (8) facing away from the spline hook gear (11).

10. The gripper device in accordance with one of a preceding claims, characterized in that the interior housing chamber (24), together with the cylinder chamber (8), can be charged with pressure.

11. The gripper device in accordance with one of a preceding claims, characterized in that the base jaws (2, 3) can be equipped with gripper jaws on the front.

12. The gripper device in accordance with one of a preceding claims, characterized in that the base jaws (2, 3) can be completely retracted into the housing (1) over their entire length.

13. The gripper device in accordance with one of a preceding claims, characterized in that the base jaws (2, 3) have receptacle openings (38) for the elements for position determination.

14. The gripper device in accordance with one of a preceding claims, characterized in that it has two or more, in particular three, base jaws (2, 3), which are disposed evenly distributed over the circumference.

## Revendications

1. Dispositif de préhension pour appareils de manipulation manuels ou automatiques,
- avec un boîtier de pince (1)
- avec au moins une mâchoire de base (2, 3) logée mobile dans le boîtier de pince (1),
- avec un dispositif d'entraînement (4) de la mâchoire de base (2, 3), ledit dispositif d'entraînement (4) consistant en un piston (5) à actionnement hydraulique ou pneumatique et mobile dans un cylindre (6), et en une transmission à coin (11), et
- avec une sécurité anti-torsion pour la mâchoire de base (2,3),
- la mâchoire de base (2,3) présentant une section circulaire au moins au niveau de sa première portion (25) qui dépasse du boîtier de pince (1) lorsque le dispositif de préhension (1) est ouvert et le boîtier (1) étant doté d'éléments d'étanchéité (22, 23) entourant cette première portion (25) de la mâchoire de base (2, 3),
caractérisé en ce que
la sécurité anti-torsion, qui s'appuie contre le boîtier (1), agit directement sur une seconde portion (26) de la mâchoire de base (2, 3), qui reste dans le boîtier (1) lorsque la mâchoire de base (2, 3) est en position sortie.

2. Dispositif de préhension selon la revendication 1, caractérisé en ce que la sécurité anti-torsion consiste en une rainure longitudinale (27) pratiquée sur la mâchoire de base (2, 3) et dans laquelle s'engage une clavette (28) qui s'appuie contre le boîtier (1) et est logée à l'intérieur dudit boîtier (1).

3. Dispositif de préhension selon la revendication 2, caractérisé en ce que la clavette (28) est fixée à un capot de boîtier (29), et est en particulier réalisée d'un seul tenant avec ce dernier.

4. Dispositif de préhension selon l'une des revendications 1 à 3, caractérisé en ce que la sécurité anti-torsion est prévue du côté orienté vers le dispositif d'entraînement (4) des mâchoires de base (2,3).

5. Dispositif de préhension selon l'une des revendications 2 à 4, caractérisé en ce que le boîtier (1) est ouvert au niveau de la rainure longitudinale (27) et peut être obturé au moyen d'un capot de boîtier (29) doté d'une clavette (28).

6. Dispositif de préhension selon l'une des revendications 3 à 5, caractérisé en ce que le capot de boîtier (29) peut être vissé au boîtier (1).

7. Dispositif de préhension selon l'une des revendications 3, 5 ou 6, caractérisé en ce que le capot de boîtier (29) est relié au boîtier (1) de manière étanche.

8. Dispositif de préhension selon l'une des revendications précédentes, caractérisé en ce que les éléments d'étanchéité (22, 23) sont dotés, en plus des joints, de racloirs pour l'élimination des corps étrangers.

9. Dispositif selon l'une des revendications précédentes, caractérisé en ce que l'espace (24) du boîtier (1) recevant la transmission à coin (11) communique avec le côté de l'espace de cylindre (8) qui est opposé à la transmission à coin (11).

10. Dispositif de préhension selon l'une des revendications précédentes, caractérisé en ce que l'espace interne de boîtier (24) peut être mis sous pression en même temps qu'un espace de cylindre (8).

11. Dispositif de préhension selon l'une quelconque des revendications précédentes, caractérisé en ce que les mâchoires de base (2, 3) peuvent recevoir frontalement des mâchoires de pince.

12. Dispositif de préhension selon l'une des revendications précédentes, caractérisé en ce que les mâchoires de base (2, 3) sont intégralement rétractables dans le boîtier (1).

13. Dispositif de préhension selon l'une des revendications précédentes, caractérisé en ce que les mâchoires de base (2, 3) présentent des évidements (38) destinés à recevoir des éléments de détection de position.

14. Dispositif de préhension selon l'une des revendications précédentes, caractérisé en ce qu'il présente au moins deux, en particulier trois mâchoires de base (2, 3) réparties uniformément sur sa périphérie.
